# EUROPEAN PATENT APPLICATION

(11) **EP 1 149 667 A1**
(43) Date of publication of application: **31.10.2001**
(21) Application number: 01303841.9
(22) Date of filing: 27.04.2001
(51) Int. Cl.: B25B 11/00, B25B 5/10

(54) **Tool for mutual clamping of planar members which butt together**

(30) Priority: 29.04.2000 GB 0010403
(71) Applicant: Wallis, Alan, Sheffield, South Yorkshire S9 2SP (GB)
(72) Inventor: Wallis, Alan, Sheffield, South Yorkshire S9 2SP (GB)
(74) Representative: Perry, Julie Elizabeth

(57) **Abstract**

A clamping device 10 comprises a first part 12 and a second part 14 together with means 16 for drawing the two parts together. The first part 12 comprises a longer member 18 and a vertically disposed elongate member 20 at the end of which is pivotally mounted a suction pad 24 and means of which the first part may be secured to a planar member such as a sheet of glass. Similarly, the second part 14 has a suction pad 28 pivotally mounted thereon for securement to a further planar member. In use, the suction pads 24, 28 are secured to adjacent planar members and the second part 14 is then moved along part 18 as far as possible and then is secured in position relative to the first part 12 in order to urge the edges of the planar members together.

## Description

### Field of the Invention

The present invention relates to a clamping device for attachment to a first planar member and a second planar member and a method of clamping a first planar member to a second planar member.

### Background to the Invention

During and/or subsequent to the formation of a bond between the edges of two planar members, such as sheets of glass it is important to ensure that the edges are pressed or drawn together, and it is one of the aims of the present invention to provide a device for this purpose.

### Summary of the Invention

According to a first aspect of the present invention there is provided a clamping device for attachment to a first planar member and a second planar member, the device being arranged to bias the members in a first direction relative to each other.

Preferably the clamping device is arranged for attachment onto a surface of the first planar member. Preferably the clamping device is arranged for attachment onto a surface of the first planar member by suction means.

Preferably the clamping device is arranged for attachment onto a surface of the second planar member. Preferably the clamping device is arranged for attachment onto a surface of the second planar member by suction means.

Preferably the clamping device is arranged to bias the members selectively in a first and second direction relative to each other.

Preferably the clamping device is arranged to bias the members in a direction towards each other. Preferably the clamping device is arranged to bias the members in a direction towards a potential bond between the first and second planar members. The clamping device may be arranged to bias the members in a direction towards the bond between the first and second planar members. The bond may be being formed whilst the clamping device biases the members in a direction towards each other.

The clamping device may be arranged to bias the members in a direction away from each other. Preferably the clamping device is arranged to bias the members in a direction away from a bond in-between the first and second planar members.

Preferably the first planar member is a substantially rigid planar member and more preferably is a sheet of glass.

Preferably the second planar member is a substantially rigid planar member and more preferably is a sheet of glass.

Preferably the clamping device comprises means to gradually increase the pressure of the bias in a first direction.

Preferably the clamping device comprises means to gradually increase the pressure of the bias in a second direction.

According to a second aspect of the present invention there is provided an assembly comprising a first planar member, a second planar member and a clamping device for attachment to the first and second planar members, the device being arranged to bias the members in a first direction relative to each other.

Preferably the first planar member is a substantially rigid planar member and more preferably is a sheet of glass.

Preferably the second planar member is a substantially rigid planar member and more preferably is a sheet of glass.

According to a third aspect of the present invention there is provided a method of clamping a first planar member to a second planar member, the method comprising attaching a clamping device to the first planar member and the second planar member and biasing the members in a first direction relative to each other.

The method may comprise biasing the members towards each other.

The method may comprise biasing the members away from each other.

The method may comprise biasing the members in a first direction during formation of a bond between the first and second planar members.

The method may comprise biasing the members in a first direction during release of a bond between first and second planar members.

Preferably the method comprises attaching the clamping device onto the surface of the first planar member. Preferably the method comprising attaching the clamping device onto the surface of the second planar member.

The method may comprise gradually increasing the pressure of the bias in the first direction.

The method may comprise clamping the first planar member to the second planar member wherein the first and second planar members are co-planar.

The method may comprise clamping the first planar member at an angle relative to the second planar member. The method may comprise clamping the first planar member at a right angle to the second planar member.

According to a further aspect of the present invention there is provided a clamping device for drawing together or urging apart substantially planar members during and/or subsequent to the formation of a bond between said planar members, the device comprising a first part having means for securing thereto a first planar member and a second part having means for securing thereto a further planar member, and means for drawing or urging the planar members together or apart.

Preferably the clamping device draws together or urges apart edges of substantially planar members during and/or subsequent to the formation of a bond between said edges, the device comprising means for drawing the edges or urging apart the edges of the planar members together.

The device may comprise means for drawing together or urging apart the edges of co-planar members.

The device may comprise means for drawing together or urging apart the edges of two planar members which are not co-planar, for example two planar members disposed at an angle relative to each other. Preferably the device comprises means for drawing together or urging apart the edges of two planar members disposed at right angles to each other.

The device may comprise means for drawing together or urging apart an edge of a first planar member towards a face of a second planar member. The device may comprise means for drawing together or urging apart an edge of a first planar member towards a face of a second planar member wherein the two planar members are not co-planar, for example two planar members disposed at an angle relative to each other and preferably two planar members disposed at right angles to each other.

Preferably, the first part includes a longer elongate member, which may be substantially horizontally disposed, having at one end thereof a shorter elongate member, which may be substantially vertically disposed.

Preferably, said longer and shorter elongate members are integrally formed.

Conveniently, the first part includes suction means whereby the first part may be secured to a planar member.

Preferably, the suction means is pivotally mounted to the first part.

Preferably, the suction means and first part may swivel relative to each other through up to 180°.

Preferably, the second part is adapted, at its upper end, to engage with the longer elongate member of the first part in such a manner that the two parts may be drawn together.

The second part may be pivotally movable relative to the first part.

Preferably the second part may be arranged at an angle relative to the first part when the first part is secured to the first planar member and the second part is secured to the second planar member. Preferably the device comprises means for gradually urging the first planar member towards or away from the second planar member when the first part is secured to the first planar member and the second part is secured to the second planar member.

Conveniently, the second part includes suction means whereby the second part may be secured to another planar member.

Preferably, the suction means is pivotally mounted to the second part.

Preferably, the suction means and the second part may swivel relative to each other through up to 180°.

Conveniently, the second part engages with the first part by means of a ratchet arrangement, comprising a protrusion on the second part and a series of notches along the longer elongate member of the first part, the protrusion being kept in engagement with a particular notch by means of a leaf spring disposed between the two parts.

Preferably, the device includes a locking handle by means of which pressure may be exerted on the leaf spring to retain the two parts in inter-engagement. Preferably as the pressure is exerted the first and second planar members are urged towards or away from one another.

According to another aspect of the present invention there is provided a method of clamping and drawing together or urging apart two planar members during or subsequent to the formation of a bond therebetween, the method including securing to one of said planar members a first part of a device for drawing or urging said planar members together or apart, securing to a further one of said planar members a second part of said device, and drawings or urging said two parts together or apart.

Preferably, as well as being suitable for drawing together or urging apart co-planar members, the method and device are suitable for drawing together or urging apart two planar members which are not co-planar, for example two planar members disposed at an angle relative to each other.

More preferably the method and device are suitable for drawing together or urging apart two planar members disposed at right angles to each other.

The method may comprise drawing together or urging apart the edge of a first planar member with the edge of a second planar member.

The method may comprise drawing together or urging apart a face of a first planar member with an edge of a second planar member.

Any feature of any aspect of any invention or embodiment described herein may be combined with any feature of any aspect of any other invention or embodiment described herein.

### Brief Description of the Drawings

An embodiment of the present invention will now be described, by way of example only, with reference to the accompanying drawings, in which:
Figure 1 is a side view of a device according to the present invention.
Figure 2 illustrates the various components of the device of figure 1.

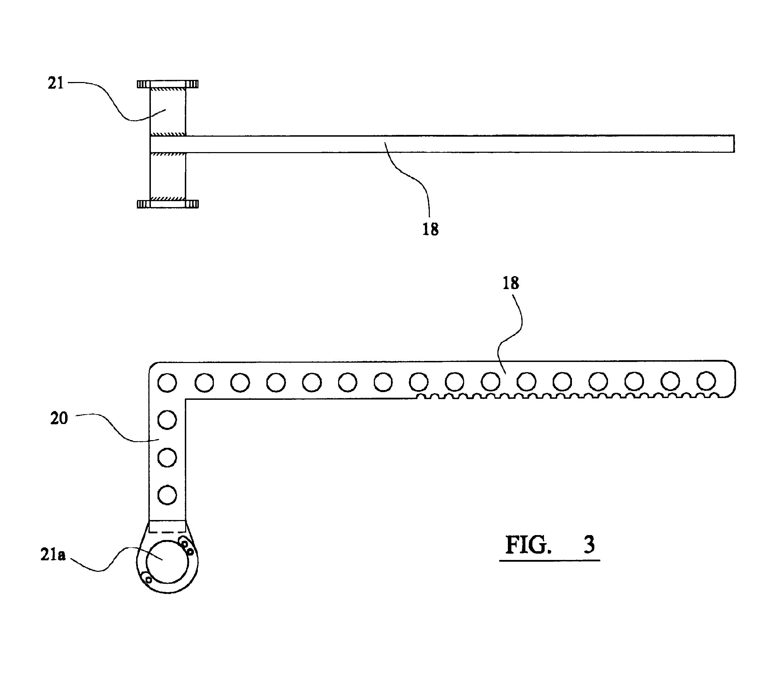

Figure 3 comprises plan and side views of the first part of the device.

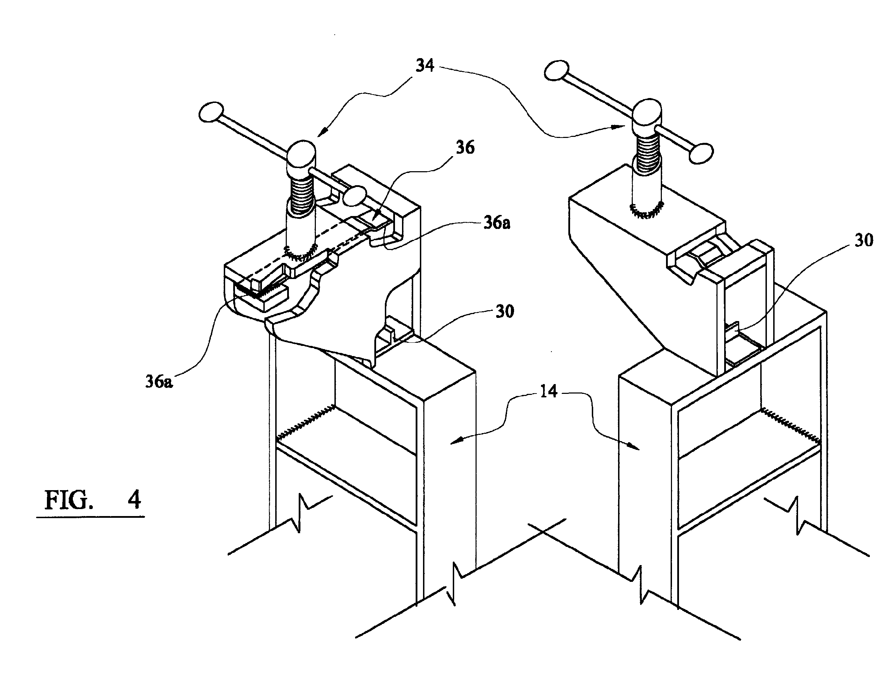

Figure 4 comprises perspective views from two sides of the upper region of the second part of the device.
Figure 5 is a side view of the device drawing together two members which are co-planar.
Figure 6 is a side view of the device drawing together two members disposed at right angles to each other.
Figure 7 is a schematic cross-section of a bond between two glass sheets disposed at an angle relative to each other.
Figure 8 is a schematic cross-section of a bond between two glass sheets disposed at an angle relative to each other.
Figure 9 is a schematic cross-section of a bond between an edge of a first glass sheet and a face of the second glass sheet.
Figure 10 is a side view of the device urging two planar members away from each other.

### Description of the Preferred Embodiment

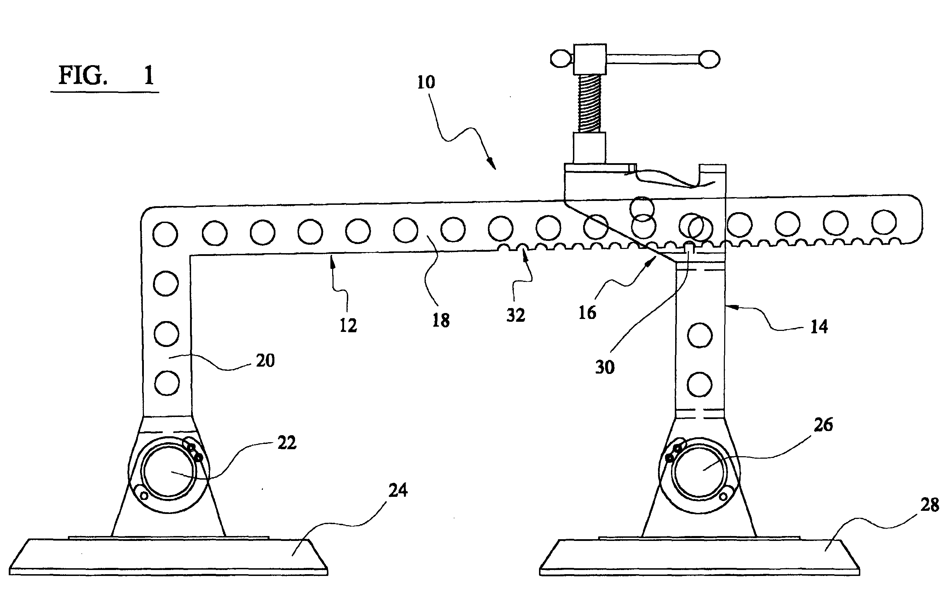

Referring to figure 1 of the drawings, a clamping device 10 according to the present invention comprises a first part 12 and a second part 14 together with means 16 for drawing the two parts together.

The first part 12 comprises a longer substantially horizontally elongate disposed member 18 terminating at one end in a shorter, down-turned, substantially vertically disposed elongate member 20 at the end of which is pivotally mounted about pivot axis 22 a suction pad 24 by means of which the first part may be secured to a planar member such as attachment to the surface of a sheet of glass. The second part 14 similarly has pivotally mounted at one end thereof about pivot axis 26 a suction pad 28 and at the upper end thereof has a protrusion 30 which may be received into any one of a number of notches 32 in the member 18 of the first part.

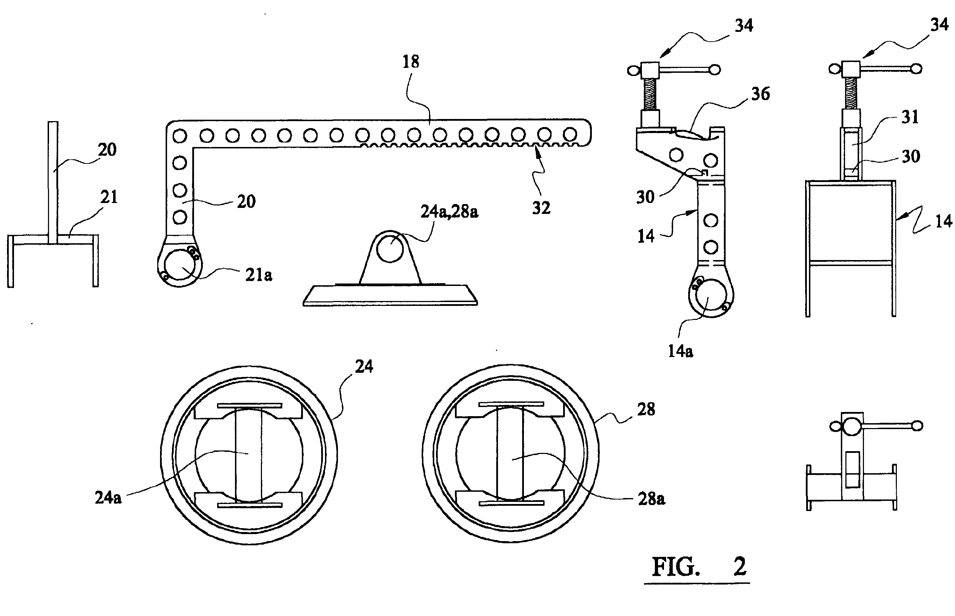

The various components referred to above are illustrated separately and in more detail in figure 2, from which it can be seen that each of the suction pads include a pivot pin 24a, 28a attached thereto. The lowermost end of member 20 terminates in a bracket 21 each side of which has a hole 21a to accommodate the pivot pin 24a.

Part 14, most of which is formed as a bracket, also has a pair of aligned holes 14a at its lowermost end, for accommodating the pivot pin 28a of suction pad 28. However, at its upper most end it includes a protrusion 30 which, when the member 18 of the first part is slotted into space 31 of bracket 14, may engage with any one of notches 32 in the member 18.

Above protrusion 30 and arranged to be moved within space 31 by rotational handle means 34 is a leaf spring 36, one end 36a of which is secured to the body of part 14 and the other end 36b of which is free and may be urged downwardly to press on top of member 18 by rotation of handle 34, thereby urging protrusion 30 into a selected notch of notches 32.

In use, the device is first loosened by rotating the handle 34 in a direction which causes the leaf spring 36 to move upwardly out of space 31. The suction pads 24, 28 are then secured to adjacent sheets of glass whose edges have been, or are in the process of being bonded together, the part 14 is then moved along part 18 as far as is possible having regard to the relative positions of the two suction pads on the glass sheets, and the handle 34 is then rotated in the opposite direction, thus bringing leaf spring 36 down into space 31 to bear against member 18, thus retaining the protrusion 30 within the selected notch.

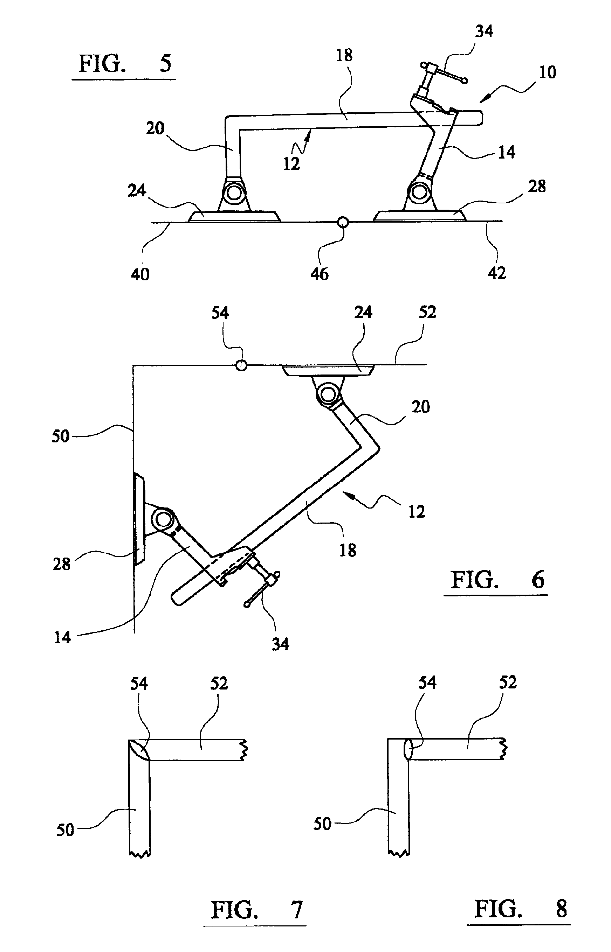

As shown in Figure 5, the device 10 is suitable for drawing together two glass sheets 40, 42 wherein the glass sheets are co-planar. The suction pad 24 of the first part 12 is secured to the face of the first glass sheet 40. Similarly, the suction pad 28 of the second part 24 is secured to the face of the second glass sheet 42. The first and second glass sheets 40, 42 and hence the first and second parts 12, 14 are moved relative towards each other in order to form a bond 46 therebetween. Once in the correct position and aligned, the handle 34 is tightened to secure the protrusion of 30 in a notch 32 provided in the member 18.

In this correct position, the second part 14 may not be perpendicular to the member 18 and accordingly the second part is pivotally movable relative to the first part 12 and can be secured by the handle 34 and leaf spring mechanism 36 at an angle to the member 18. Accordingly, this ensures that the device can secure the first and second glass sheet 40, 42 at any pre-selected distance. In addition, as the handle and leaf spring mechanism is tightened, this action gradually urges the suction pad 28 and hence the second glass sheet 42 towards the suction pad 24 and first glass sheet 40.

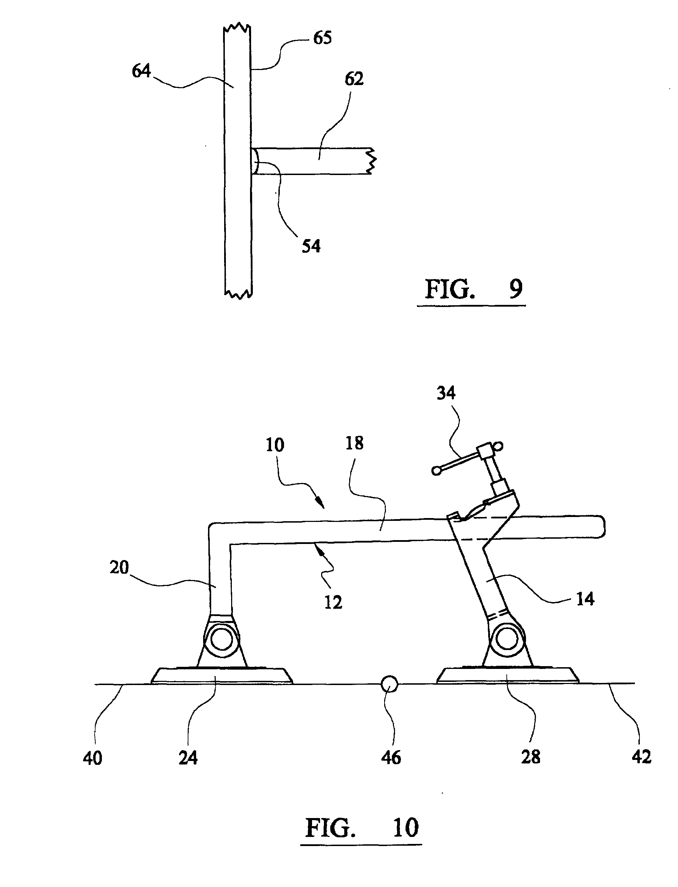

In addition, the second part 14 can be secured to the elongate member 18 in a reverse configuration such that the handle mount extends towards the free end of the elongate member 18, as shown in Figure 10. This enables the device 10 to be used in order to help separate the bond 46 between the two sheets of glass 40, 42. The material forming the bond 46 is adherent such that if it is cut through the material it may re-adhere before the two glass sheets 40, 42 can be separated. In order to separate the sheets 40, 42 the suction pads 24, 28 are secured to the glass sheet and then the handle 34 is tightened in order to urge the two glass sheets 40, 42 away from each other as a result of the second part 14 extending at an angle relative to the first part 12 away from the suction pad 24.

As shown in Figure 6, the device 10 can draw together two glass sheets 50, 52 which are not co-planar, since the glass sheets are disposed at an angle relative to each other, for example a right angle. The suction pad 24 of the first part 12 is secured to the first glass sheet 52. Similarly, the suction pad 28 of the second part 14 is secured to the face of the second glass sheet 50. The edges of the glass sheets 50, 52 are then moved relative to each other into the correct bonding position and hence the first and second parts 12, 14 move relative to each other in order for the formation of a bond joint 54. The first and second parts 12, 14 are then retained in that position using the handle 34 and associated leaf spring and retaining mechanism. Again, the second part 14 may be secured at an angle relative to the elongate member 18.

The device can be used with planar members at any selected angle whether urging the planar members away from or towards each other.

The bond joint 54 may be formed at a right angle join between the two sheets, as shown in Figure 7 and Figure 8 rather than spaced from the angled section shown in Figure 6. In addition, the device may be used to form a bond 60 between the edge of a first glass sheet 62 and the surface 65 of a second glass sheet 64, as shown in Figure 9.

A number of clamping devices 10 may be used to clamp the first glass sheet to the second glass sheet during formation of a bond therebetween or during separation of a bond between a first glass sheet and a second glass sheet.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A clamping device for attachment to a first planar member and a second planar member, the device being arranged to bias the members in a first direction relative to each other.

2. A clamping device according to claim 1 in which the clamping device is arranged for attachment onto a surface of the first planar member and onto a surface of the second planar member.

3. A clamping device according to any preceding claim in which the clamping device is arranged to bias the members selectively in a first and second direction relative to each other.

4. A clamping device according to any preceding claim in which the clamping device is arranged to bias the members in a direction towards each other.

5. A clamping device according to claim 4 in which the clamping device is arranged to bias the members in a direction towards a bond between the first and second planar members.

6. A clamping device according to any preceding claim in which the clamping device is arranged to bias the members in a direction away from each other.

7. A clamping device according to claim 7 in which the clamping device is arranged to bias the members in a direction away from a bond between the first and second planar members.

8. A clamping device according to any preceding claim comprising means to gradually increase the pressure of the bias in the first direction.

9. A clamping device according to any preceding claim in which the clamping device comprises a first part having means for securing thereto the first planar member and a second part having means for securing thereto the second planar member, and means for drawing the planar members together.

10. A method of clamping a first planar member to a second planar member, the method comprising attaching a clamping device to the first planar member and the second planar member and biasing the members in a first direction relative to each other.
